# EUROPEAN PATENT SPECIFICATION

(11) **EP 3 081 968 B1**
(45) Date of publication and mention of the grant of the patent: **12.08.2020**
(21) Application number: 15163970.5
(22) Date of filing: 17.04.2015
(51) Int. Cl.: G02B 6/122, H04B 10/70

(54) **PHOTONIC SYSTEM**
PHOTONISCHES SYSTEM
SYSTÈME PHOTONIQUE

(43) Date of publication of application: 19.10.2016
(73) Proprietor: Hitachi, Ltd., Tokyo (JP)
(72) Inventor: Brossard, Frederic, Cambridge, Cambridgeshire CB3 0HE (GB); Mar, Jonathan, Cambridge, Cambridgeshire CB3 0HE (GB)
(74) Representative: Piotrowicz, Pawel Jan Andrzej

(56) References cited:
- EP-A1- 1 503 328
- EP-A1- 2 202 550
- WO-A1-2006/134568
- US-A1- 2013 279 850

## Description

### Field of the Invention

The present invention relates to a photonic system.

### Background

A system comprising an optical cavity and a quantum dot coupled to the cavity can be used in many applications such as, for example, quantum optics and photonic quantum networks. Such a system can be used to generate single photons, to store, manipulate and retrieve quantum information via entangled photons, and to realise cluster-state computing using an array of such coupled systems.

These quantum processes tend to take place in a so-called "strong coupling" regime in which a quantum of energy can be reversibly exchanged between the cavity and the quantum dot. To achieve this, optical cavities should have a Q/V ratio (where Q is the quality factor of the cavity and V is the optical mode volume) which is preferably as large as possible. Photonic crystal cavities can confine light to a very small volume (of the order of λ³ where λ is wavelength) and enable Q to exceed 10⁶. Thus, photonic crystals are particularly suited to achieving strong coupling.

Examples of using photonic crystal cavities can be found in H. Kim, R. Bose, T. C. Shen, G. S. Solomon and E. Waks: "A quantum logic gate between a solid-state quantum bit and a photon", Nature Photonics, volume 7, page 373 (2013) and S. Carter, T. M. Sweeny, M. Kim, D. Solenov, S. E. Economou, T. L. Reinecke, L. Yang, A. S. Bracker and D. Gammon: "Quantum control of a spin qubit coupled to a photonic crystal cavity", Nature Photonics, volume 7, page 329 (2013).

Although these system exhibit strong coupling, they employ spatially randomlydistributed, self-assembled quantum dots. Strong coupling requires quantum dots to be positioned to an accuracy of at least 50 nm and within the small optical volume provided by the photonic crystal nanocavity. Consequently, there is a small chance of achieving reaching the strong coupling regime without prior knowledge of the position of the quantum dot. One solution is to register the position of a suitable quantum dot using alignment marks and then pattern the photonic crystal around the quantum dot registered to the alignment marks. Although this can help to achieve deterministic coupling of an individual photonic crystal nanocavity to an individual quantum dot, a collection of self-assembled quantum dots still tend to be randomly distributed spatially. Thus, the probability of finding two or more identical quantum dots with known, periodic separation is extremely low. Moreover, random distribution of quantum dots can limit not only aligning a dot to a cavity, but also the scale of the system. Therefore, this approach is unlikely to be used to realise an array of coupled systems in a quantum network. Furthermore, self-assembled quantum dots tend to comprise III-V semiconductor materials and so tend to be grown using III-V semiconductor material substrates. This can limit the choice of materials used for the photonic crystal.

EP 1 503 328 A1 describes a single photon source including a vertical cavity structure, a lateral photonic crystal structure and a single-electron turnstile. A quantum dot is defined into which electrons are controllably introduced. The single-electron turnstile and photonic crystal structure is used to control emission characteristics of a photon from the quantum dot such that photons can be emitted at a given rate, having a given configuration.

WO 2006/ 134568 A1 describes a photonic crystal is grown within a semiconductor structure which includes a light emitting region disposed between an n-type region and a p-type region. The photonic crystal may be multiple regions of semiconductor material separated by a material having a different refractive index than the semiconductor material. Growing the photonic crystal, rather than etching a photonic crystal into an already-grown semiconductor layer, avoids damage caused by etching which may reduce efficiency, and provides uninterrupted, planar surfaces on which to form electric contacts.

US 2013/279850 A1 describes a three-dimensional dielectric photonic material which features a Dirac-like dispersion in a quasi-two-dimensional system. Examples include a face-centered cubic (fcc) structure formed by alternating layers of dielectric rods and dielectric slabs patterned with holes on respective triangular lattices. This fcc structure also includes a defect layer, which may comprise either dielectric rods or a dielectric slab with patterned with holes. This defect layer introduces Dirac cone dispersion into the fcc structure's photonic band structure.

### Summary

The present invention seeks to provide an improved photonic system and an improved method of fabricating the photonic system.

According to a first aspect of the present invention there is provided a photonic system comprising a base layer structure and a pillar-based photonic crystal comprising an array of pillars upstanding from the base layer structure, the photonic crystal comprising a lattice defect defining a cavity, the lattice defect comprising a pillar-shaped nanowire upstanding from the base layer structure, the pillar-shaped nanowire comprising at least two sections comprising at least two different semiconductor materials configured to provide at least one quantum well.

The photonic system can realise strong coupling between the quantum dot and the cavity. Thus, the system can provide a scalable system which can be easily integrated into an electrical and/or optical system.

The lattice defect may take the form of a point defect. The lattice defect may take the form of a line defect. The line defect may comprise a line of three or more missing pillars and one or more pillar-shaped nanowire(s) disposed in the middle of the line. The lattice defect may take the form of a group defect. The lattice defect may take the form of a heterostructure.

The lattice defect may comprise at least one pillar having at least one different dimension (such as width or diameter) and/or having a different refractive index.

The lattice defect may comprise at least one vacancy, i.e. vacant sites where there are no pillars. For example, the lattice defect may comprise a pillar-shaped nanowire disposed between two vacancies.

The lattice defect may comprise at least two pillar-shaped nanowires.

The pillars may comprise etched pillars and the pillar-shaped nanowire may comprise an epitaxial pillar-shaped nanowire. Conversely, the pillars may comprise epitaxial pillars and the pillar-shaped nanowire may comprise etched nanowire.

The base layer structure may include a layer of semiconductor material, such as silicon. The layer of semiconductor material may be monocrystalline. The base layer structure may include a masking layer, for example a layer of dielectric material such as silicon dioxide, overlying the layer of semiconductor material.

The masking layer may have a through-hole and the pillar-shaped nanowire may be upstanding from the layer of semiconductor material through the through-hole. The pillar-shaped nanowire may comprise a cap comprising a material for catalysing growth of the nanowire, e.g. via vapour-liquid-solid mechanism.

The pillar-based photonic crystal may comprise at least two defects. The defects may be spaced apart, i.e. forming two different cavities. The system may comprise at least two pillar-shaped nanowires upstanding from the base layer, each pillar-shaped nanowire occupying a respective vacancy. If the nanowires occupy spaced apart vacancies, then the two nanowires may form two separate coupled quantum dot-nanocavity systems.

The pillars may comprise silicon.

The space between pillars may be filled with a dielectric material.

The nanowire may comprise at least one III-V material.

The photonic crystal may be configured for light having a wavelength λ between 900 nm and 1550 nm.

According to a second aspect of the present invention there is provided a quantum information processing system comprising a system according to the first aspect.

According to a third aspect of the present invention there is provided a method of fabricating a photonic system, the method comprising forming a pillar-based photonic crystal comprising an array of pillars upstanding from a base layer structure, the array having a vacancy defining a cavity and forming a pillar-shaped nanowire wire upstanding from the base layer structure occupying the vacancy having at least two sections comprising at least two different semiconductor materials configured to provide at least one quantum well.

Forming the pillar-shaped nanowire wire may comprise positioning a nucleation site within a predetermined region in or on the base layer structure. Positioning a nucleation site within a predetermined region in or on the base layer structure may comprise aligning a mask pattern for the nucleation site to the pillar-based photonic crystal. The method may comprise exposing a resist using a lithography process capable of registering (e.g. to a set of registration marks or to the photonic crystal) to within a sufficiently high accuracy, e.g. to within 100 nm or better. The lithography process capable of registering to within a sufficiently high accuracy may be electron beam lithography.

Forming the pillar-based photonic crystal may comprise etching a layer of material which overlies the base layer structure.

Forming the pillar-shaped nanowire wire may comprise growing the nanowire. Forming the pillar-shaped nanowire wire comprises growing the nanowire using a vapour-liquid-solid growth process. Forming the pillar-shaped nanowire wire may comprise epitaxially growing the nanowire.

### Brief Description of the Drawings

Certain embodiments of the present invention will now be described, by way of example, with reference to the accompanying drawings, in which:
Figure 1 is a perspective view of a photonic system comprising a two-dimensional photonic crystal which comprises an array of pillars having a vacancy occupied by a pillar-like nanowire having an embedded quantum dot;
Figure 2 is a plan view of the photonic crystal shown in Figure 1;
Figure 3 is cross section of the device shown in Figure 2 taken along the line A-A';
Figures 4a, 4b and 4c illustrate alternative nanowires;
Figure 5 is a perspective view of conjoined nanowires;
Figure 6 is a plan view of a photonic crystal cell;
Figure 7 is a process flow diagram of a method of fabricating the photonic device shown in Figure 1; and
Figures 8A to 8J show a photonic device at different stages during fabrication.

### Detailed Description of Certain Embodiments

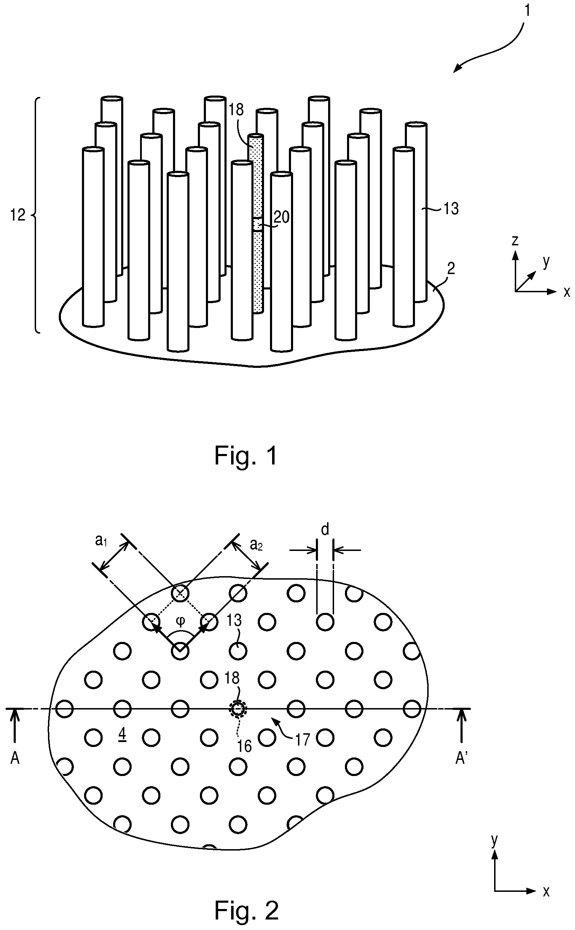

Referring to Figures 1, 2 and 3, a photonic system 1 is shown.

The photonic system 1 comprises a base structure 2 comprising a semiconductor substrate 3 having an upper surface 4, a buried dielectric layer 5 having an upper surface 6 and formed on the upper surface 4 of the substrate 3, a buried semiconductor layer 7 having an upper surface 8 and formed on the upper surface 6 of the buried dielectric layer 5 and a thin dielectric layer 9 having an upper surface 10 and formed on the upper surface 8 of the buried semiconductor layer 7. The dielectric layer 9 has a small aperture 11 forming a through-hole between the upper surface 8 of the semiconductor layer 7 and the upper surface 10 of the dielectric layer 9.

The semiconductor substrate 3 comprises monocrystalline silicon and the buried dielectric layer 5 comprises silicon dioxide. The buried semiconductor layer 7 comprises monocrystalline silicon. The buried semiconductor layer 7 may have a thickness of, for example, between 20 and 100 nm. The buried semiconductor layer 7 may be doped, for example, with an n-type impurity to a concentration of at least 5 × 10¹⁷ cm⁻³ to provide one or more contact regions (not shown).

The system 1 comprises a two-dimensional, pillar-based photonic crystal 12 upstanding from the base structure 2 comprising an array of semiconductor pillars 13. The pillars 13 comprise silicon. The pillars 13 are circular in plan view. As will be explained in more detail later, the pillars 13 are preferably formed by an anisotropic etching process. The etched nature of the pillars 13 can be determined by inspection, for example, by electron-beam microscopy to find etch process artefact and/or by chemical analysis to identify etch products.

The pillars 13 sit on the upper surface 10 of the dielectric layer 9. The pillars 13 are arranged in a square lattice having first and second lattice constants, a₁, a₂, where a₁ = a₂ and having respective values which are of the order of magnitude of 10 nm to 1 µm and an angle, ϕ, of 90°. The pillars 13 can be arranged in different lattices, such as a hexagonal lattice or a rectangular lattice (i.e. a₁ ≠ a₂ and 0 ≤ ϕ ≤ 180°). The pillars 13 have a diameter, d, which is of the order of magnitude of 10 nm to 1 µm. The pillars 13 have a height h₁, which is of the order of magnitude of 100 nm to 10 µm.

The photonic crystal 12 comprises a lattice defect 16 which forms a nanocavity 17. In this example, the lattice defect 16 takes the form of a point defect resulting from a pillar-like semiconductor nanowire 18 (i.e. vertical, elongate nanowire) upstanding from the buried semiconductor layer 7 occupying a lattice site which has a different refractive index and diameter compared to the pillars 13. However, the lattice defect 16 can take other forms, for example, a line or group defect. Moreover, the lattice defect 16 may comprise one or more vacancies and/or modified pillars 13, e.g. pillars 13 having a different (e.g. smaller) diameter.

The centre of the nanowire 18 and the centre of lattice site are aligned to within 100 nm. However, a small degree of misalignment (for example, the centre of nanowire 18 can be offset from the centre of the lattice site by more than 50 nm) can be tolerated since the use of pillars (as opposed to holes) helps to concentrate the optical field within the nanowire.

The nanowire 18 is circular in plan view. The nanowire 18 has a height, h₂, which is the same as that of the pillars 13 plus the thickness of dielectric layer 9.

The nanowire 18 includes at least two sections 19₁, 19₂, 20 comprising at least two different semiconductor materials forming at least one quantum dot 22. If the quantum dot 22 is formed at the bottom 23 or top 24 of the nanowire 18, then it is possible for the nanowire 18 to consist of only two sections, each comprising a different semiconductor material. However, if the quantum dot 22 is formed between the bottom 23 and top 24 of the nanowire 18, then the nanowire 18 will comprise at least three sections 19₁, 19₂, 20.

In this example, the nanowire 18 comprises first and second sections 19₁, 19₂ comprising gallium arsenide and a section 20 comprising indium gallium arsenide, interposed between the first and second sections 19₁, 19₂, which corresponds to the quantum dot 22. The section 20 corresponding to the quantum dot 22 has a height, h₃, which is of the order of magnitude of 1 nm or 10 nm, for example, about 3 to 10 nm.

As will be explained in more detail later, the nanowire 18 is preferably formed by a growth process, more preferably an epitaxial growth process. The grown nature of the nanowire 18 can be determined by inspection, for example, by electron-beam microscopy to identify crystal structure and growth artefacts, or even inferred by the device structure.

The quantum dot 22 is coupled to an optical mode of the nanocavity 17.

The nanowire 18 need not comprise a single dot or have a three-section structure, but can have, for example, more than one dot or more than three sections, as will now be explained.

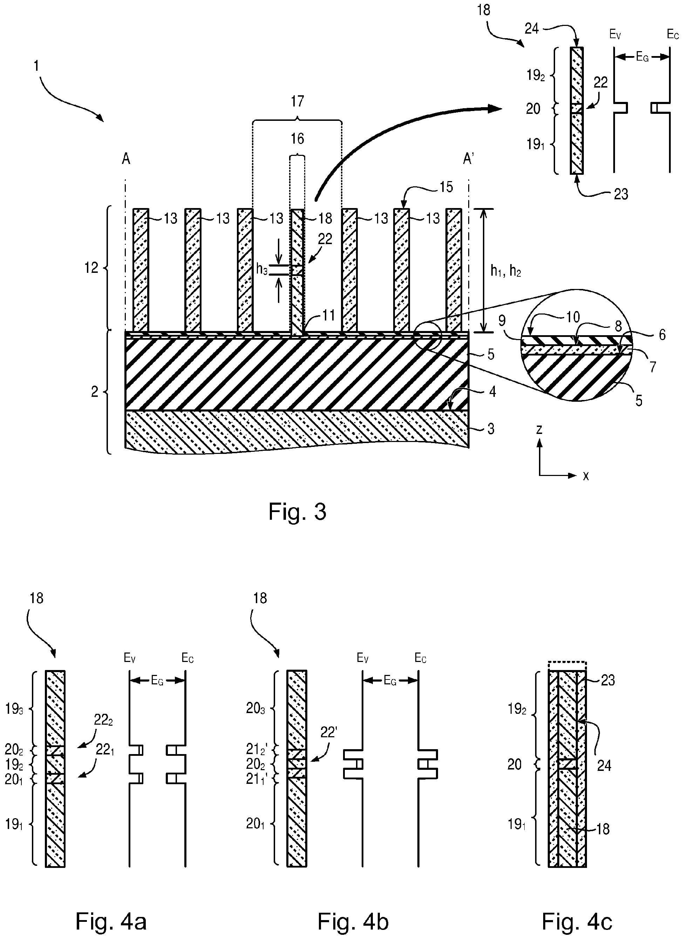

Referring to Figure 4a, a nanowire 18 may comprise first, second and third sections 19₁, 19₂, 19₃ comprising a semiconductor material having a relatively large band gap, such as gallium arsenide, and first and second sections 20₁, 20₂ comprising a semiconductor material having a relatively small band gap, such as indium gallium arsenide, interposed between the first and second sections 20₁, 20₂ respectively and which correspond to first and second quantum dots 22₁, 22₂. A nanowire 18 may include further sections to provide more than two quantum dots 22₁, 22₂.

Referring to Figure 4b, a nanowire 18 may comprise first, second and third sections 20₁, 20₂, 20₃ comprising a semiconductor material having a relatively small band gap, such as gallium arsenide, and first and second sections 21₁', 21₂' comprising a semiconductor material having a relatively large band gap, such as aluminium arsenide, interposed between the first and second sections 21₁', 21₂' respectively. The first and second sections 21₁', 21₂' provide tunnel barriers and the second section 20₂ comprising the narrow band gap corresponds to a quantum dot 22'.

Referring to Figure 4c, a sheath-like shell 23 comprising a semiconductor material or a dielectric material may be provided around an outer surface 24 (i.e. side wall) of the nanowire 18, regardless of the number, type and arrangement of quantum dots 22. This can help to discourage and even avoid defect non-radiative recombination sites on the outer surface 24 of the nanowire 18 and increase its optical quality.

Other combinations of different material types can be used. For example, the second section 20₂ comprising a semiconductor material having a relatively small band gap shown in Figure 4b can be replaced by a section of semiconductor material having an even smaller band gap, such as indium gallium arsenide.

The buried crystalline silicon layer 7 and the aperture 11 in the dielectric layer 9 provide a nucleation site for the nanowire 18. Additionally or alternatively, a metal catalyst seed (not shown) can be used.

The buried silicon dioxide layer 5 can be used to provide a first (lower) confinement layer. The device 1 may further comprise an in-plane dielectric matrix (not shown) and a second (upper) dielectric confinement layer (not shown) overlying the silicon pillars 13 to help provide confinement of the optical field within the two-dimensional photonic crystal 12 via total internal reflection.

The pillars 13 need not be circular in plan view. The pillars 13 can be elliptical in plan view. The pillars 13 can be polygonal, e.g. octagonal or hexagonal in plan view.

The nanowire 18 need not be circular in plan view. The nanowire 18 can be elliptical in plan view. The nanowire 18 can be polygonal, e.g. octagonal or hexagonal in plan view.

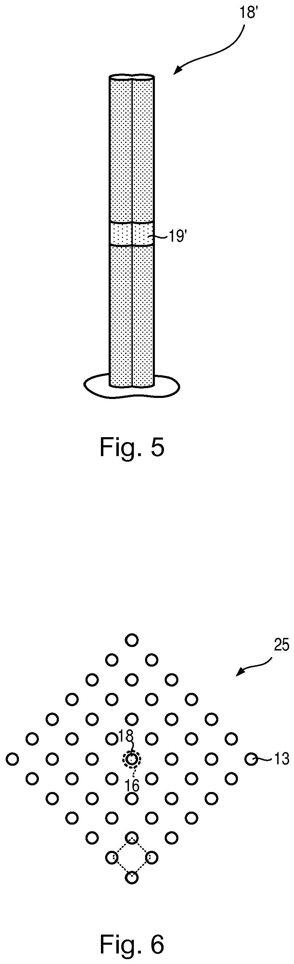

Referring to Figure 5, two or more conjoining nanowires 18' can be used, i.e. nanowires which having a bilobate (or "dumb-bell") shape in plan view. This arrangement can be used to form a laterally-offset coupled multiple quantum dot arrangement 19', for example, a lateral, coupled double quantum dot 19'.

As will be explained in more detail later, the two-dimensional photonic crystal 12 is preferably formed using a "top-down" process, i.e. etching, whereas the nanowire 18 is preferably formed using a "bottom-up" process, i.e. growth. However, the two-dimensional photonic crystal 12 may also be formed by growth.

Referring to Figure 6, the two-dimensional photonic crystal 12 may comprise a cell 25 comprising a 7 × 7 array of pillars 13.

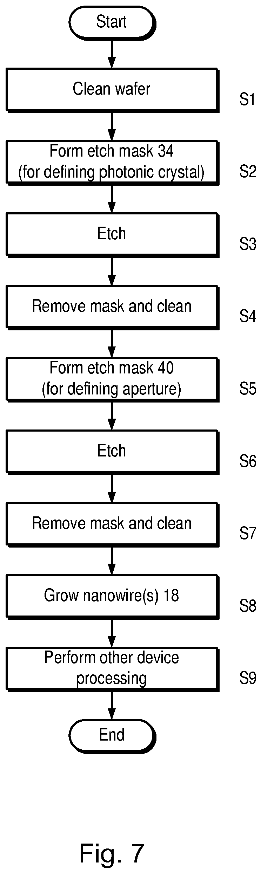

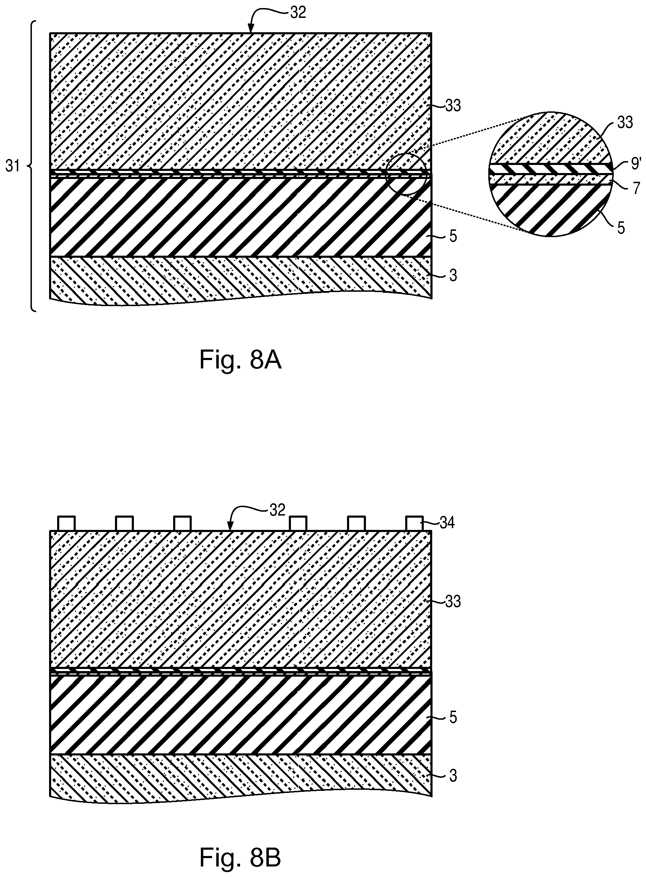

Referring to Figure 7 and to Figure 8A to 8J, a method of fabricating the device 1 will now be described.

Referring to Figures 7 and 8A, a double silicon-on-insulator wafer 31 having an upper surface 32 is cleaned (step S1). The double silicon-on-insulator wafer 31 comprises a silicon handle layer 3, a first buried oxide layer 5, a buried silicon layer 7, a second (unpatterned) buried oxide layer 9' and a top silicon layer 33.

Referring in particular to Figure 8B, a layer of electron-beam resist (not shown) is applied to the upper surface 32 of the wafer 31, is exposed by a scanning electron-beam (not shown) and is subsequently developed to form a first etch mask 34 (step S2).

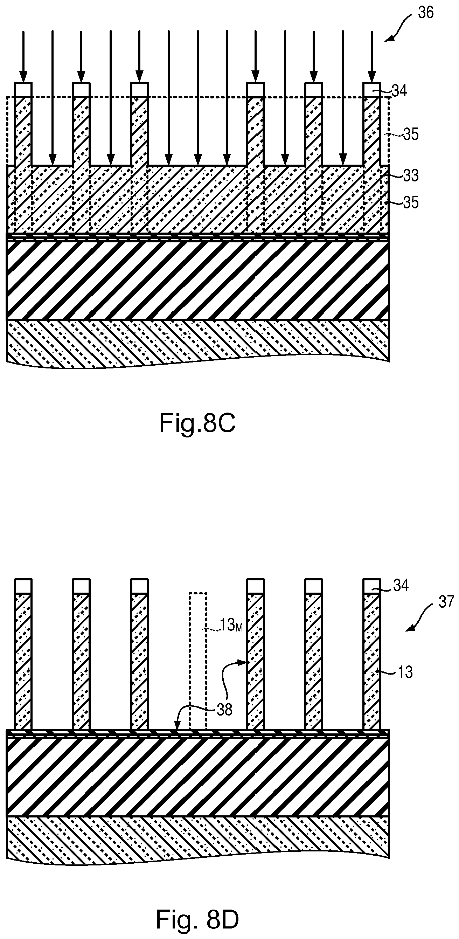

Referring to Figures 7 and 8C, portions 35 of the top silicon layer 33 are removed by anisotropic dry etching 36, such as, for example, inductively-coupled plasma reactive-ion etching (ICP-RIE) (step S3).

Referring also to Figure 8D, etching leaves an etched wafer 37 having an etched surface 38. Etching results in an array 12 of silicon pillars 13 having a missing pillar 13_{M}.

The etch mask 34 is removed and the wafer is cleaned (step S4).

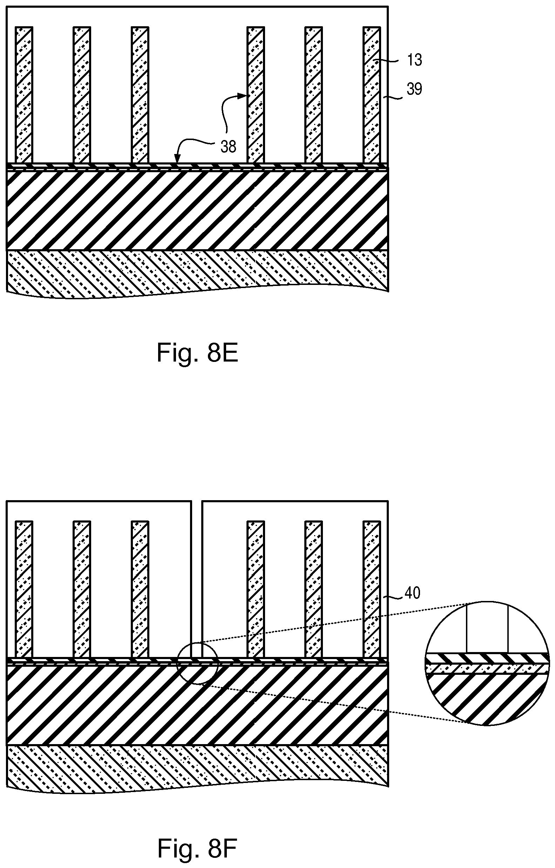

Referring to Figures 7, 8E and 8F, a thick layer of electron-beam resist 39 is applied over the etched surface 38 including the pillars 13, is exposed by a scanning electron-beam (not shown) and is subsequently developed to form a second etch mask 40 (step S5).

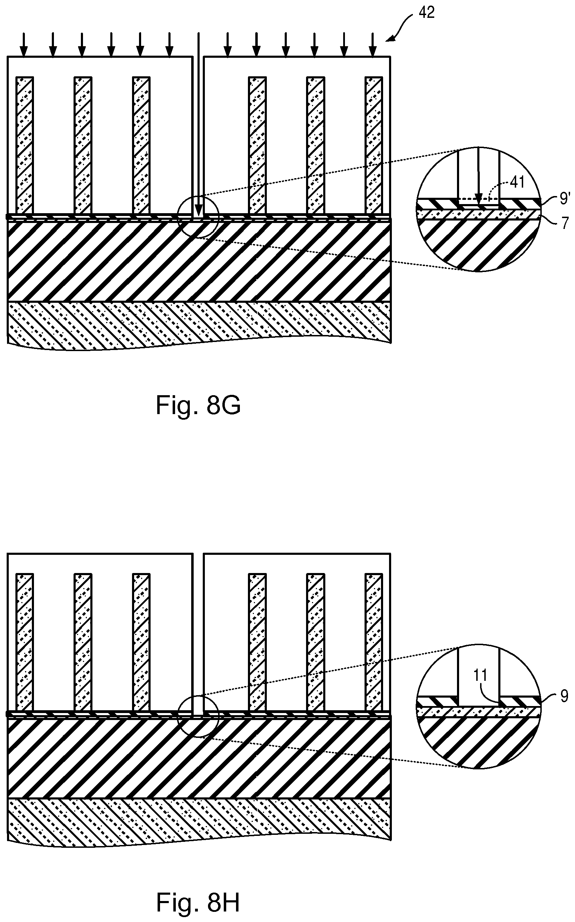

Referring to Figures 7 and 8G, a portion 41 of the silicon dioxide layer 9' is removed by anisotropic dry etching 42, such as, for example, inductively-coupled plasma reactive-ion etching (ICP-RIE) (step S6).

Referring also to Figure 8H, etching (e.g. wet or dry etching) results in an aperture 11 in the silicon dioxide layer 9.

The etch mask 40 is removed and the wafer is cleaned (step S7).

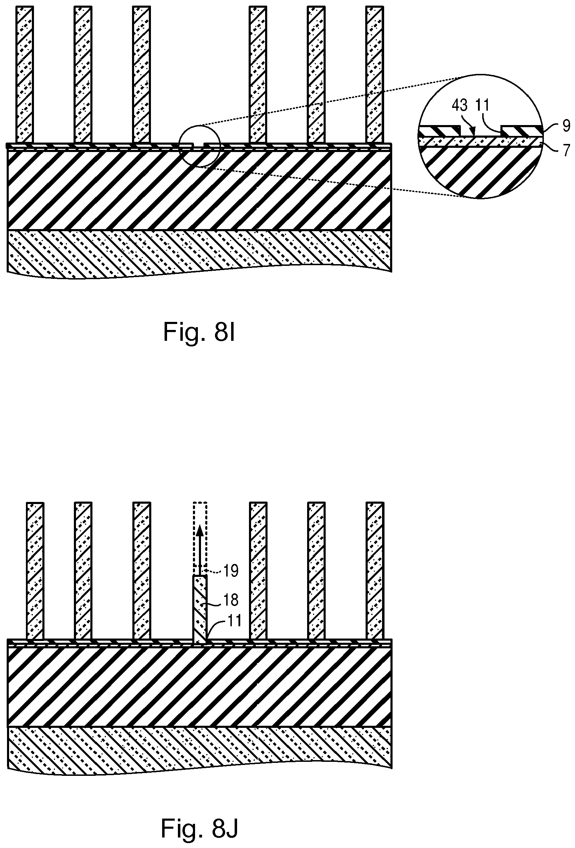

Referring to Figure 8I, the silicon dioxide layer 9 provides a mask for epitaxial growth. The aperture 11 exposes a portion of the underlying silicon layer 7 which serves as a nucleation site 43.

Referring to Figures 7 and 8J, molecular beam epitaxy and/or vapour-liquid-solid epitaxy can be used to grow a nanowire 18 upwardly through the aperture 11 (step S8). The nanowire 18 comprises gallium arsenide and growth is switched to grow a section 19 of indium gallium arsenide before resuming with gallium arsenide. The top of the nanowires 18 can be doped to provide contact regions.

Materials other than gallium arsenide and indium gallium arsenide may be used. More than one section may be provided thereby providing a multiple quantum well structure.

As mentioned earlier, a catalyst, such as a metal particle or pad, can be used as a nucleation site. Thus, in addition to or instead of forming an aperture 11 in an epitaxial growth mask layer (such as a thin layer of silicon dioxide), a small pad of catalyst material may be provided. This can be achieved, for example, by using the second etch mask 40 as a lift-off mask, depositing a thin layer of catalyst material and lifting-off unwanted regions of catalyst material. Alternatively, a layer of metal may be deposited after etching and then lift-off used so as to define an aperture and layer of metal with the aperture.

Referring to Figure 7, further processing steps may be carried out (step S9). Further processing steps may include formation of a shell (not shown) around the nanowire 18, formation of confinement layers and providing electrical contacts (not shown) to the nanowire 18.

Referring to Figures 1, 2 and 3, aspects of the photonic device 1 and the process of fabricating the device 1 can have one or more advantages and may have the following additional features.

First, the position of the nucleation site for the vertical nanowire 18 and, thus, the quantum dot 22 can be precisely and deterministically chosen. This can allow the quantum dot 22 to be positioned at an electric-field maximum of the photonic crystal nanocavity and so help to achieve strong optical coupling. Furthermore, this arrangement can be repeated to form more than one coupled quantum dot-nanocavity.

Secondly, the growth mode of the vertical nanowire 18 and the quantum dot 22 can be precisely controlled thereby allowing electronic and/or optical properties of the quantum dot 22 to be precisely controlled. For example, by controlling the thickness of the quantum dot 22 (for instance by controlling growth rate, growth time, growth temperature, growth pressure, *etc.*)*,* by controlling the diameter of the vertical nanowire 18 (by controlling the diameter of the catalyst seed or aperture 11) and/or by controlling the material composition, it is possible to engineer the transition energy (energies) of the quantum dot 22 so that it (they) coincide with the nanocavity resonance and so help to achieve strong coupling. Furthermore, the exciton dipole polarization in the quantum dot 22 can be controlled by adjusting the dimensions and strain fields in the quantum dot 22. This can allow control over coupling quantum dot 22 to a desired photonic crystal nanocavity polarization mode, for example, the transverse magnetic (TM) polarized nanocavity mode. This control can also facilitate coupling of a plurality of coupled quantum dot-nanocavities and so allow ordered, scaled-up quantum network of such coupled quantum dot-nanocavities.

Third, the vertical nanowire 18 and the section 20 forming the quantum dot 22 may each comprise materials which are different from those of the photonic crystal 12 and/or the semiconductor materials in the base structure 2. Thus, materials can be selected which can improve the electrical properties of the nanowire 18 and the quantum dot 22 and the optical properties of the photonic crystal 12 substantially independently of each other. For example, III-V semiconductor materials can be used to form the nanowire 18 and the quantum dot 22, whereas silicon, silicon-based dielectrics (such as silicon dioxide and silicon nitride), silicon-based conductive materials (such as a tungsten silicide) and non-silicon based materials which used in silicon-based processing (such as aluminium and hafnium oxide) can be used in the rest of the structure.

Fourthly, optical confinement can be enhanced by virtue of self-alignment of the electric field maximum inside the nanowire 18. This can enhance coupling between the quantum dot 22 and the nanocavity 17.

Fifthly, a wide range of materials can be used for quantum dot barriers, for example, to provide specific combinations of barrier height and width and so achieve a variety of characteristics. For example, aluminium arsenide barriers may be used in conjunction with indium arsenide quantum dots to form large potential barriers. Silicon barriers may be used in conjunction with III-V material (such as indium arsenide) to minimize nuclear hyperfine coupling of a spin which is confined in the quantum dot 22 to its surrounding material. Even though the materials used for the quantum well, barriers and/or wire can have greatly different lattice constants and even crystal structure, strain tends not to affect the properties of the quantum dot 22 since any such strain tends to be relaxed by the sidewalls of the nanowire.

Sixthly, a pillar-based photonic crystal nanocavity with an embedded quantum dot can be used to form a light emitting diode (for example, usable as an electrically-pumped single-photon source) or a photodiode. As mentioned earlier, the buried semiconductor layer and the top of the nanowires can be doped to provide contact regions (not shown). Electrical contacts to the contact regions can be used to provide contacts to the nanowires 18. A diode structure can be arranged to shift, via the Stark effect, the quantum well transition energies relative to, and independently of, the pillar-based photonic crystal nanocavity modes.

Seventhly, the pillar-based photonic crystal 12 stands on a base structure 2, which can help to provide mechanical support, can make it easier to make electrical contact to the nanowire and can allow the device to be integrated with other different types of devices on the same substrate. In contrast, hole-based photonic crystals (not shown) tend to be formed in thin, suspended membranes which have a thickness which is typically only a few hundred nanometers and which is mechanically weaker, make it harder to make electrical contacts and to integrate with other devices.

Finally, it is possible to grow a stack of quantum dots in a nanowire 18. If there is more than one nanowire 18, then each nanowire 18 can have different or the same quantum dot configurations, i.e. number, composition, size and/or separation of quantum dots. When coupling to the pillar-based photonic nanocavity, it may be possible, if the quantum dots 22 have the same energies, to couple more than one quantum dot 22 in the same nanowire to the nanocavity mode or, if the quantum dots 22 have different energies, to address individual quantum dots 22 by tuning the nanocavity mode or the quantum dot energies via the quantum-confined Stark effect.

The device 1 can be used in quantum information processing, such as quantum computing and quantum communication or cryptography, using photons as a flying qubit and an exciton in the quantum dot 22 as a stationary qubit. The state of the stationary qubit can be transferred to the polarization of a cavity photon, i.e. the flying qubit and stored to a remote identical nanocavity-quantum dot system. This arrangement can be integrated into an on-chip architecture using a combination of photonic crystal nanocavity and waveguides or employ an optical fibre (not shown) for long-distance transfer of quantum information. Two-qubit entangling logic gates, such as a quantum CNOT gate, can also be achieved in this manner. Such quantum logic gates are considered to be a prerequisite for realizing a practical quantum computer. The realization of flying qubits relies on producing single photons which the cavity-quantum dot system provides with high indistinguishability and efficiency in the strong coupling regime. In addition, coupling between multiple cavities, each containing a quantum dot, can provide a way of producing single photons or entangled states based on quantum interference effects which can be up-scaled.

It will be appreciated that many modifications may be made to the embodiments hereinbefore described.

The base structure 2 need not comprise a silicon-on-insulator substrate. The base structure 2 need not include a layer of silicon. For example, the base structure may comprise an inorganic dielectric substrate, such as glass or sapphire, or an organic substrate. The dielectric substrate may support a semiconductor thin film, such as silicon.

## Claims

1. A photonic system (1) comprising:
a base layer structure (2); and
a pillar-based photonic crystal (12) comprising an array of pillars (13) upstanding from the base layer structure, the photonic crystal comprising a lattice defect (16) defining a cavity (17);
wherein the lattice defect comprises a pillar-shaped nanowire (18, 18') upstanding from the base layer structure, the pillar-shaped nanowire comprising at least two sections (19₁, 19₂, 20) comprising at least two different semiconductor materials configured to provide at least one quantum well (22).

2. A system according to claim 1, wherein the pillars (13) comprise etched pillars.

3. A system according to claim 1 or 2, wherein the pillar-shaped nanowire (18, 18') comprises an epitaxial pillar-shaped nanowire.

4. A system according to any preceding claim, wherein the base layer structure (2) includes a layer of semiconductor material (7).

5. A system according to claim 4, wherein the base layer structure (2) includes a masking layer (9) overlying the layer of semiconductor material (7), wherein the masking layer has a through-hole (11) and the pillar-shaped nanowire (18, 18') upstanding from the layer of semiconductor material through the through-hole.

6. A system according to claim 5, wherein the pillar-shaped nanowire (18, 18') comprises a cap comprising a material for catalysing growth of the nanowire.

7. A system according to any preceding claim, wherein the pillar-based photonic crystal (1) comprises at least two spaced-apart defects (16).

8. A system according to claim 7, comprising at least two pillar-shaped nanowires (18, 18') upstanding from the base layer (2), each pillar-shaped nanowire occupying a respective vacancy.

9. A system according to any preceding claim, wherein the pillars (13) comprise silicon.

10. A system according to any preceding claim, wherein the nanowire (18, 18') comprises at least one III-V material.

11. A quantum information processing system comprising a system according to any preceding claim.

12. A method of fabricating a photonic system (1) comprising:
forming a pillar-based photonic crystal (12) comprising an array of pillars (13) upstanding from a base layer structure (2);
forming a pillar-shaped nanowire (18, 18') upstanding from the base layer structure comprising at least two sections (19₁, 19₂, 20) comprising at least two different semiconductor materials configured to provide at least one quantum well (22),
wherein the photonic crystal comprises a lattice defect (16) defining a cavity (17), the lattice defect comprising the pillar-shaped nanowire.

13. A method according to claim 12, wherein forming the pillar-based photonic crystal (12) comprising etching a layer of material which overlies the base layer structure (2).

14. A method according to claim 12 or 13, wherein forming the pillar-shaped nanowire (18, 18') wire comprises growing the nanowire.

15. A method according to any one of claims 12 to 14, wherein forming the pillar-shaped nanowire (18, 18') wire comprises growing the nanowire using a vapour-liquid-solid growth process and/or by epitaxy.

## Patentansprüche

1. Photonisches System (1), umfassend:
eine Basisschichtstruktur (2); und
einen säulenbasierten photonischen Kristall (12), der eine Anordnung von Säulen (13) umfasst, die von der Basisschichtstruktur aufrecht vorstehen, wobei der photonische Kristall einen Gitterfehler (16) umfasst, der eine Kavität (17) definiert;
wobei der Gitterfehler einen säulenförmigen Nanodraht (18, 18') umfasst, der von der Basisschichtstruktur aufrecht vorsteht, wobei der säulenförmige Nanodraht mindestens zwei Abschnitte (19₁, 19₂, 20) umfasst, die mindestens zwei unterschiedliche Halbleitermaterialien umfassen, die so gestaltet sind, dass sie mindestens einen Quantentopf (22) bereitstellen.

2. System nach Anspruch 1, wobei die Säulen (13) geätzte Säulen umfassen.

3. System nach Anspruch 1 oder 2, wobei der säulenförmige Nanodraht (18, 18') einen epitaxischen säulenförmigen Nanodraht umfasst.

4. System nach einem der vorstehenden Ansprüche, wobei die Basisschichtstruktur (2) eine Schicht aus Halbleitermaterial (7) aufweist.

5. System nach Anspruch 4, wobei die Basisschichtstruktur (2) eine Maskierungsschicht (9) aufweist, welche die Schicht aus Halbleitermaterial (7) überlagert, wobei die Maskierungsschicht eine Durchgangsbohrung (11) aufweist, und wobei der säulenförmige Nanodraht (18, 18') von der Schicht aus Halbleitermaterial durch die Durchgangsbohrung aufrecht vorsteht.

6. System nach Anspruch 5, wobei der säulenförmige Nanodraht (18, 18') eine Abdeckung umfasst, die ein Material für katalysierendes Wachstum des Nanodrahts umfasst.

7. System nach einem der vorstehenden Ansprüche, wobei der säulenbasierte photonische Kristall (1) mindestens zwei beabstandete Fehler (16) umfasst.

8. System nach Anspruch 7, das mindestens zwei säulenförmige Nanodrähte (18, 18') umfasst, die von der Basisschicht (2) aufrecht vorstehen, wobei jeder säulenförmige Nanodraht eine entsprechende freie Stelle belegt.

9. System nach einem der vorstehenden Ansprüche, wobei die Säulen (13) Silizium umfassen.

10. System nach einem der vorstehenden Ansprüche, wobei der Nanodraht (18, 18') mindestens ein III-V-Material umfasst.

11. Quanteninformationsverarbeitungssystem, das ein System nach einem der vorstehenden Ansprüche umfasst.

12. Verfahren zur Herstellung eines photonischen Systems (1), umfassend:
Ausbilden eines säulenbasierten photonischen Kristalls (12), der eine Anordnung von Säulen (13) umfasst, die von einer Basisschichtstruktur (2) aufrecht vorstehen;
Ausbilden eines säulenförmigen Nanodrahts (18, 18'), der von der Basisschichtstruktur aufrecht vorsteht, mindestens zwei Abschnitte (19₁, 19₂, 20) umfassend, die mindestens zwei unterschiedliche Halbleitermaterialien umfassen, die so gestaltet sind, dass sie mindestens einen Quantentopf (22) bereitstellen;
wobei der photonische Kristall einen Gitterfehler (16) umfasst, der eine Kavität (17) definiert, wobei der Gitterfehler den säulenförmigen Nanodraht umfasst.

13. Verfahren nach Anspruch 12, wobei das Ausbilden des säulenbasierten photonischen Kristalls (12) das Ätzen einer Materialschicht umfasst, welche die Basisschichtstruktur (2) überlagert.

14. Verfahren nach Anspruch 12 oder 13, wobei das Ausbilden des säulenförmigen Nanodrahts (18, 18') das Wachstum des Nanodrahts umfasst.

15. Verfahren nach einem der Ansprüche 12 bis 14, wobei das Ausbilden des säulenförmigen Nanodrahts (18, 18') das Wachstum des Nanodrahts unter Verwendung eines Dampf-Flüssigkeits-Feststoff-Wachstumsprozesses und/oder durch Epitaxie umfasst.

## Revendications

1. Système aphotonique (1), comprenant :
une structure de couche de base (2) ; et
un cristal photonique à base de piliers (12) comprenant un réseau de piliers (13) se dressant à partir de la structure de couche de base, le cristal photonique comprenant un défaut (16) de réseau définissant une cavité (17) ;
le défaut de réseau comprenant un nanofil en forme de pilier (18, 18') se dressant à partir de la structure de couche de base, le nanofil en forme de pilier comprenant au moins deux sections (19₁, 19₂, 20) comprenant au moins deux matériaux semi-conducteurs différents conçus pour fournir au moins un puits quantique (22).

2. Système selon la revendication 1, les piliers (13) comprenant des piliers gravés.

3. Système selon la revendication 1 ou 2, le nanofil en forme de pilier (18, 18') comprenant un nanofil épitaxial en forme de pilier.

4. Système selon l'une des revendications précédentes, la structure de couche de base (2) comprenant une couche de matériau semi-conducteur (7).

5. Système selon la revendication 4, la structure de couche de base (2) comprenant une couche de masquage (9) recouvrant la couche de matériau semi-conducteur (7), la couche de masquage ayant un trou traversant (11) et le nanofil en forme de pilier (18, 18') se dressant à partir de la couche de matériau semi-conducteur à travers le trou traversant.

6. Système selon la revendication 5, le nanofil en forme de pilier (18, 18') comprenant un capuchon comprenant un matériau pour catalyser la croissance du nanofil.

7. Système selon l'une quelconque des revendications précédentes, le cristal photonique à base de piliers (1) comprenant au moins deux défauts (16) espacés.

8. Système selon la revendication 7, comprenant au moins deux nanofils en forme de pilier (18, 18') se dressant à partir de la couche de base (2), chaque nanofil en forme de pilier occupant une place vacante respective.

9. Système selon l'une quelconque des revendications précédentes, les piliers (13) comprenant du silicium.

10. Système selon l'une quelconque des revendications précédentes, le nanofil (18, 18') comprenant au moins un matériau III-V.

11. Système de traitement d'informations quantiques comprenant un système selon l'une quelconque des revendications précédentes.

12. Procédé de fabrication d'un système photonique (1) comprenant les étapes consistant à :
former un cristal photonique à base de piliers (12) comprenant un réseau de piliers (13) se dressant à partir d'une structure de couche de base (2) ;
former un nanofil en forme de pilier (18, 18') se dressant à partir de la structure de couche de base comprenant au moins deux sections (19₁, 19₂, 20) comprenant au moins deux matériaux semi-conducteurs différents conçus pour fournir au moins un puits quantique (22),
le cristal photonique comprenant un défaut (16) de réseau définissant une cavité (17), le défaut de réseau comprenant le nanofil en forme de pilier.

13. Procédé selon la revendication 12, la formation du cristal photonique à base de piliers (12) comprenant l'étape consistant à graver une couche de matériau qui recouvre la structure de couche de base (2).

14. Procédé selon la revendication 12 ou 13, la formation du nanofil en forme de pilier (18, 18') comprenant la croissance du nanofil.

15. Procédé selon l'une quelconque des revendications 12 à 14, la formation du nanofil en forme de pilier (18, 18') comprenant la croissance du nanofil à l'aide d'un processus de croissance vapeur-liquide-solide et/ou par épitaxie.
